# EUROPÄISCHE PATENTSCHRIFT

(11) **EP 2 216 554 B1**
(45) Veröffentlichungstag und Bekanntmachung des Hinweises auf die Patenterteilung: **18.04.2012**
(21) Anmeldenummer: 09001714.6
(22) Anmeldetag: 06.02.2009
(51) Int. Cl.: F16B 19/10

(54) **Einweghülse**
Disposable casing
Douille à usage unique

(43) Veröffentlichungstag der Anmeldung: 11.08.2010
(73) Patentinhaber: Fairchild Fasteners Europe - Camloc GmbH, 65761 Kelkheim (Taunus) (DE)
(72) Erfinder: Scheinberger Marcus, 65719 Hofheim-Langenhain (DE)
(74) Vertreter: KEIL & SCHAAFHAUSEN Patentanwälte

(56) Entgegenhaltungen:
- EP-A- 1 731 773
- EP-A- 1 889 688

## Beschreibung

Die Erfindung betrifft eine Einweghülse zum Festklemmen von plattenförmigen Elementen mit einer Stirnseite zur Ausbildung einer Abstützfläche, einem an die Stirnseite anschließenden und in axialer Richtung der Einweghülse verlaufenden Distanzabschnitt, einem auf der der Stirnseite gegenüberliegenden Seite ausgebildeten Abschnitt zur Einleitung von Axialkräften, wobei zwischen dem Distanzabschnitt und dem Abschnitt zur Einleitung von Axialkräften ein als eine Nut in der Außenfläche der Hülse ausgebildeter Verformungsabschnitt vorgesehen ist, der derart ausgebildet ist, dass er sich unter einer definierten axialen Belastung so verformt, dass sich eine radial nach außen erstreckende Ausbeulung ergibt. Weiter betrifft die Erfindung die Verwendung einer Einweghülse zum Festklemmen eines plattenförmigen Elementes mit einer Öffnung. Eine derartige Einweghülse ist aus der EP 1 889 688 A1 bekannt.

Zur Herstellung von Komponenten in Sandwichbauweise mit mehreren Schichten aus Leichtmetall, Faserverbundwerkstoffen oder dgl. werden in der Regel einzelne Schichten mit Hilfe eines flüssigen, aushärtenden Dichtmaterials miteinander verklebt. Hierbei ist es notwendig, dass die einzelnen Schichten des Sandwichaufbaus während des Aushärteprozesses fixiert und durch eine definierte Vorspannung aneinander gepresst werden. Dabei wird teilweise überflüssiges Dichtmaterial aus dem Schichtaufbau verdrängt. Hierzu können Einweghülsen der oben genannten Art verwendet werden. Nach dem Aushärten können diese Hülsen entfernt und Blindniete in diese Öffnungen eingesetzt werden, um den Sandwichaufbau zusammengepresst zu halten.

Hierzu werden derartige Einweghülsen in die Öffnungen des Sandwichaufbaus eingebracht und in einem ersten Arbeitsschritt verformt, wodurch sich eine wulstartige, radial nach außen erstreckende Verformung ergibt. In einem zweiten Arbeitsschritt findet das Verspannen der Hülse relativ zu einem auf der anderen Seite des Sandwichaufbaus angeordneten Gegenstück (Vorspannelement) statt, wobei die Hülse mit der dem Vorspannelement zugewandten Seite der Ausformung an dem plattenförmigen Element des Sandwichaufbaus anliegt und der Rest der Hülse in der Öffnung des Sandwichaufbaus liegt.

Bei der eingangs genannten EP 1 889 688 A1 ist die Einweghülse mittels einer Zugspindel eines Vorspannelements zusammenstauchbar, wobei sich die Hülse in einem Verformungsabschnitt verformt und radial nach außen stülpt. Zu diesem Zweck weist die Hülse eine bauchige Ausnehmung auf, die die Wandstärke der Gewindehülse bereichsweise verjüngt. Dieser geschwächte Bereich dient zu einer definierten Einleitung der Verformung der Hülse. Die Ausbeulung bildet eine Anlagefläche, die an dem plattenförmigen Element des Sandwichaufbaus anliegt. Mittels des Vorspannelementes lässt sich dann die Hülse gegen das Vorspannelement ziehen, wobei die Hülse und das Vorspannelement jeweils über entsprechende Anlageflächen das Zusammenpressen der einzelnen Schichten des Sandwichaufbaus bewirken.

Dazu ist es notwendig, dass die Ausstülpung in einem vordefinierten Bereich stattfindet und andere Bereiche der Hülse, die sich beispielsweise gegen das Vorspannelement abstützen, davon unberührt bleiben. Um hohe Spannkräfte in den Sandwichaufbau zu leiten, muss die Einweghülse an der Ausbeulung große Kräfte aufnehmen können, ohne dass die Ausbeulung umknickt und die Hülse in die Öffnung des Sandwichaufbaus rutscht.

Die EP 1 731 773 A2 beschreibt eine Blindnietanordnung mit einem Blindnietkörper zum dauerhaften Verbinden zweier Platten. Zum Verformen des Blindnietkörpers ist ein Aufspanndorn mit einem Gewindeabschnitt vorgesehen, der in einen entsprechenden inneren Gewindeabschnitt des Hohlnietkörpers einer

Öffnung geschraubt wird. Ein weiterer Abschnitt der inneren Öffnung des Hohlnietkörpers ist strukturell geschwächt und weist eine Nut auf. Die dem Gewindeabschnitt entgegengesetzte Seite des Hohlnietkörpers besitzt einen Flansch, der sich von dem Hohlnietkörper radial nach außen erstreckt. Zum Verbinden zweier Platten wird der Hohlnietkörper bis zum Flansch in vorgefertigte Löcher in den Platten gesteckt. Infolge axialer Kräfte durch den Aufspanndorn knickt der geschwächte Bereich des Hohlnietkörpers zunächst im Bereich der Nut ein, welche sich zusammenfaltet, wodurch der Hohlnietkörper gestaucht wird. Die Nut dehnt sich nach außen aus, um eine festes Verspannen der Platten zu bewirken. Im Anschluss daran knickt der Hohlnietkörper radial auf der von dem Flansch abgewandten Seite der Platten zusätzlich ein, wodurch sich eine Ausbeulung bildet um die Platten einander zu befestigen.

Es ist daher Aufgabe der vorliegenden Erfindung, eine Einweghülse vorzuschlagen, die derart ausgestaltet ist, dass die sich nach außen erstreckende Ausbeulung hohe Kräfte aufnehmen kann und die Verformung gleichzeitig in einem vordefinierten Bereich der Hülse gebildet wird. Gleichzeitig sollte die Verformung möglichst homogen an der Einweghülse erfolgen, d.h., dass die Ausbeulung sich auf dem Umfang möglichst gleichmäßig ausbilden soll, um die Belastung auf den Sandwichaufbau im Bereich der Öffnung möglichst gleichmäßig zu verteilen und Materialschäden zu vermeiden.

Diese Aufgabe wird erfindungsgemäß dadurch gelöst, dass die Nut auf der der Stirnseite abgewandten Seite durch einen radial verlaufenden ersten Absatz begrenzt wird. Der erste Absatz muss dabei nicht exakt senkrecht zu der Längsachse der vorzugsweise einstückigen Hülse verlaufen, sondern kann auch nur etwa radial ausgebildet sein. Der durch die Nut geschwächte Bereich der Hülse deformiert sich bei auf die Hülse wirkenden axialen Kräften definiert unter Ausbildung einer ringförmigen Ausbeulung. Der radial verlaufende Absatz bildet dabei eine Kerbstelle, die die Einleitung der wulstartigen Ausbeulung begünstigt. Gleichzeitig kann sich die Ausbeulung derart ausbilden, dass sie an dem ersten Absatz anliegt. Der erste Absatz kann somit die Ausbeulung abstützen, wodurch höhere Kräfte aufgenommen werden können, wenn die verformte Hülse beim Verspannen gegen das plattenförmige Element des Sandwichaufbaus gezogen wird. Zudem ergibt sich im Verformungsbereich eine besonders gleichmäßige um die Einweghülse verlaufende Ausbeulung. Die Belastung, die von der Hülse auf das plattenförmige Element des Sandwichaufbaus ausgeübt wird, wird so im Bereich der Öffnung um die Einweghülse herum gleichmäßiger verteilt.

Vorzugsweise wird die Nut auf der der Stirnseite zugewandten Seite durch einen schräg verlaufenden und/oder abgestuft verlaufenden zweiten Absatz begrenzt. Dieser Absatz kann sich z.B. etwa in einem Winkel von 45° zur Achse der Einweghülse erstrecken.

Wenn die Hülse nach der Verformung verspannt wird, liegt die Anlagefläche an der äußersten Schicht des Sandwichaufbaus an, wobei der zweite Absatz innerhalb der Öffnung in dem plattenförmigen Element des Sandwichaufbaus liegt. Die Ausbeulung ist dabei häufig derart ausgeformt, dass sie an ihrem Grund an der Einweghülse eine starke Krümmung aufweist. Der zweite Absatz bewirkt, dass die Krümmung nicht an der Innenwand oder der Kante der Öffnung des Sandwichaufbaus anliegt und diese dabei ggf. beschädigt, weil der Durchmesser der Hülse in dem Verformungsbereich, und damit in dem Bereich, in dem die Krümmung der Ausbeulung liegt, kleiner ist als der Durchmesser der Öffnung des plattenförmigen Elementes des Sandwichaufbaus. Damit wird vermieden, dass Belastungskonzentrationen im Grat der Öffnung entstehen.

In Weiterbildung dieses Erfindungsgedankens ist es vorgesehen, dass der Abschnitt, an dem die axialen Kräfte in die Einweghülse eingeleitet werden, ein Innengewinde ist. Die Verformungskräfte können dann beispielsweise mittels einer Zugspindel, die in den Innengewindeabschnitt der Hülse einschraubbar ist, eingeleitet werden. Auf diese Weise ist es möglich, die Hülse gegen ein entsprechendes Gegenhalteelement, wie etwa einem Vorspannelement, zu ziehen, bis sich die Hülse bei einer definierten Kraft unter Ausbildung der radial nach außen erstreckenden Ausbeulung verformt.

Grundsätzlich ist es jedoch auch möglich, die axialen Kräfte durch Druckkräfte einzuleiten, die beispielsweise auf der der Stirnseite abgewandten Seite der Hülse aufgebracht werden. Alternativ ist es auch möglich, die Hülse in anderer geeigneter Weise gegen das Vorspannelement zu ziehen, bis sich einerseits die Ausbeulung zur Bildung der Anlagefläche ausbildet und andererseits eine geeignete Spannkraft aufgebracht wird.

Wenn der Außendurchmesser der Einweghülse im Bereich des Innengewindeabschnitts darüber hinaus kleiner ist als der Durchmesser im Bereich des Distanzabschnittes, erzeugen die axialen Kräfte in der Hülse in dem Bereich der Nut ein die Verformung begünstigendes Moment. Die definierte Ausbeulung wird somit erleichtert.

Nach einer bevorzugten Ausführungsform ist die Wandstärke der Einweghülse im Bereich des Verformungsabschnittes auch durch eine Aussparung auf der Innenseite vermindert. Durch diese definierte Schwächung kann das Ausbeulen des Verformungsabschnittes weiter erleichtert werden.

Es hat sich darüber hinaus als vorteilhaft herausgestellt, die Hülse zumindest bereichsweise aus einem bei einer definierten Belastung durch Ausbeulung plastisch verformbaren Material, vorzugsweise Aluminium, vorzusehen, um einerseits ausreichend hohe Klemmkräfte zu bewirken und eine stabile Anlagefläche auszubilden und andererseits die Einweghülse mit beispielsweise zylindrischer Außenfläche homogen und rasch zu verformen, so dass sich die Ausbeulung bildet. Insbesondere in Verbindung mit Sandwichaufbauten mit nicht paralleler Ober- und Unterseite ist die Verwendung einer derartigen Hülse vorteilhaft, weil sich die Ausbeulung an die Oberfläche des plattenförmigen Elementes anschmiegen kann, was eine im Bereich der Öffnung des plattenförmigen Elementes gleichmäßige Materialbelastung bewirkt.

Nach einer weiteren Ausführungsform weist die Stirnfläche, die als Abstützfläche gegen ein geeignetes Vorspannelement dient, Mittel zur Zentrierung, wie einen sich in axialer Richtung erstreckenden Vorsprung oder einer Nut, auf. Das sichert eine effektive Abstützung der eingeleiteten axialen Kräfte und unterstützt die gleichmäßige Ausbildung der Ausbeulung.

Das Eindringen von Verunreinigungen in den Innengewindeabschnitt der Hülse während des Einführens der Einweghülse in die Öffnung der plattenförmigen Elemente des Sandwichaufbaus kann dadurch verhindert werden, dass die Hülse auf der der Stirnseite abgewandten Seite zusätzlich mit einer Kappe versehen ist. Es hat sich weiter als vorteilhaft herausgestellt, wenn der Außendurchmesser der Kappe größer ist als der Außendurchmesser des Distanzabschnittes. Dadurch werden Rückstände in der Öffnung, wie beispielsweise Kleberrückstände oder Rückstände des Plattenmaterials, entfernt, so dass diese nicht das Vorspannelement verkleben. Dabei wird es besonders bevorzugt, wenn die Hülse mit einer Abstreiflippe versehen ist, die den Außendurchmesser der Kappe definiert.

Die Erfindung betrifft weiterhin die Verwendung der oben genannten Einweghülse zum Festklemmen eines plattenförmigen Elementes, wobei die Einweghülse nach Ausbildung der Ausbeulung mit dieser gegen das zu verklemmende Element anlegbar ist. In diesem Zustand verbleibt zwischen der Innenwand der Öffnung und dem zweiten Absatz ein radialer Freiraum, der durch den zweite Absatz und/oder den Nutgrund des Verformungsabschnitts gebildet wird. Die Verwendung einer derartigen Hülse birgt insbesondere in Verbindung mit geneigten Oberflächen erhebliche Vorteile, da die Hülse große Spannkräfte übertragen kann, gleichzeitig aber auch eine optimale Kraftverteilung im Bereich der Öffnung des plattenförmigen Elements ermöglicht.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder beliebiger Kombination den Gegenstand der Erfindung, unabhängig von ihrer Zusammenfassung in den Ansprüchen oder deren Rückbeziehung.

Es zeigen schematisch:
- Figur 1: im Längsschnitt eine erfindungsgemäße Einweghülse,
- Figur 2: im Längsschnitt die Einweghülse nach Figur 1 nach der Verformung und
- Figur 3: eine Detailansicht der Ausbeulung in Figur 2.

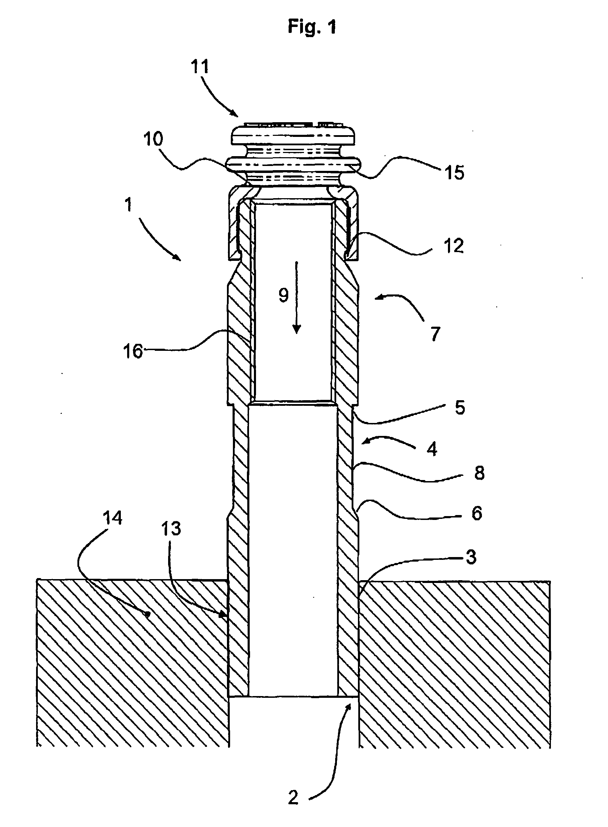

Die in Figur 1 dargestellte einstückige Einweghülse 1 weist eine Stirnseite 2 zur Ausbildung einer Abstützfläche auf und einen an die Stirnseite anschließenden und in axialer Richtung der Einweghülse verlaufenden Distanzabschnitt 3. Im Anschluss an den Distanzabschnitt 3 ist an der Außenfläche der Einweghülse 1 eine Nut 4 angeordnet, die auf ihrer der Stirnseite 2 abgewandten Seite durch einen radial verlaufenden ersten Absatz 5 begrenzt wird. Auf der in axialer Richtung anderen Seite der Nut 4 ist die Nut durch einen schräg verlaufenden zweiten Absatz 6 begrenzt. An den ersten Absatz anschließend weist die Einweghülse 1 einen Abschnitt 7 zur Einleitung von Axialkräften auf. Wie aus der Figur 1 ersichtlich, ist die Innenfläche der Einweghülse 1 im Wesentlichen glatt und zylindrisch ausgebildet.

Die Nut 4 bildet dabei zwischen dem ersten Absatz 5 und dem zweiten Absatz 6 einen Verformungsabschnitt 8. In diesem Abschnitt ist die Wanddicke der Einweghülse 1 vergleichweise gering. Weiterhin ist in Figur 1 durch den Pfeil 9 die Richtung der einzuleitenden axialen Kräfte auf der der Stirnseite 4 entgegengesetzten Seite 10 der Einweghülse 1 angedeutet.

In der dargestellten Ausführungsform weist die Einweghülse 1 eine zusätzliche Kappe 11 auf, die auf die in der Figur obere Seite 10 der Einweghülse 1 gestülpt ist und mittels einer Schnappverbindung 12 an der Einweghülse 1 befestigbar ist. Figur 1 zeigt die Einweghülse in einem Zustand, nachdem sie mit ihrem oberen Ende 10 durch eine Öffnung 13 in einem plattenförmigen Element 14 eines Sandwichaufbaus gebracht worden ist. Vorteilhafterweise weist hierzu die Kappe 11 zumindest eine Abstreiflippe 15 auf, deren Außendurchmesser größer ist als der größte Außendurchmesser der eigentlichen Einweghülse 1. Wenn die Einweghülse 1 mit der an der oberen Seite 10 montierten Kappe 11 voran durch die Öffnung 13 des plattenförmigen Elementes 14 geschoben wird, können so Kleberückständer oder auch Materialrückstände des plattenförmigen Elementes aus der Öffnung 13 entfernt werden.

Der Abschnitt 7 zur Einleitung axialer Kräfte weist bei dieser Ausführungsform ein Innengewinde 16 zur Einleitung der axialen Kräfte auf. Dies ermöglicht es, dass eine nicht dargestellte Zugspindel, die durch die Stirnseite 2 in die Einweghülse 1 eingeführt wird und mit einem entsprechenden Außengewinde versehen ist, in das Innengewinde 16 eingreift und die axialen Kräfte in Richtung des Pfeils 9 ausübt. Um eine Verformung der Einweghülse 1 zu bewirken, ist die Stirnseite 2 als Abstützfläche ausgebildet, über die die eingeleiteten axialen Kräfte 9 in einem nicht dargestellten Bauteil angestützt werden können.

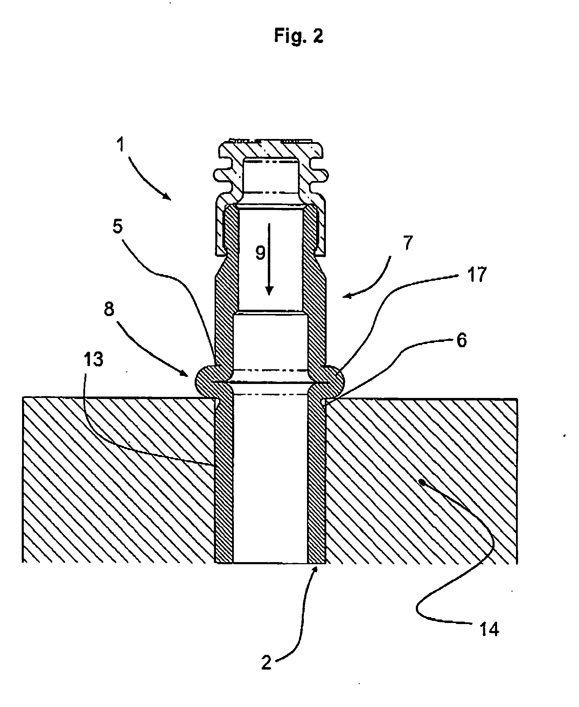

In der Figur 2 ist die Einweghülse 1 in einem bereits verformten Zustand dargestellt, wobei das Innengewinde 16 nicht dargestellt ist. Die beispielsweise aus Aluminium bestehende Einweghülse 1 ist dabei derart ausgelegt, dass sie sich in dem Verformungsabschnitt 8 bei einer bestimmten axialen Kraft 9 derart verformt, dass sich eine radial nach außen erstreckende, wulstartige Ausbeulung 17 zwischen dem ersten Absatz 5 und dem zweiten Absatz 6 bildet.

Dabei ist die Einweghülse 1 gegen das plattenförmige Element 14 verspannt, indem die Einweghülse 1 in die Öffnung 13 gezogen wird, bis die Einweghülse 1 mit der Ausbeulung 17 an dem plattenförmigen Element 14 anliegt. Dieser Zustand ist in Figur 2 dargestellt. Die Ausbeulung 17 liegt mit ihrer einen Seite an dem ersten Absatz 5 an und wird dort abgestützt. Dadurch kann die Ausbeulung 17 gleichzeitig hohe Kräfte auf die obere Seite des plattenförmigen Elementes 14 ausüben. Der Sandwichaufbau kann so mit hohen Spannkräften verspannt werden.

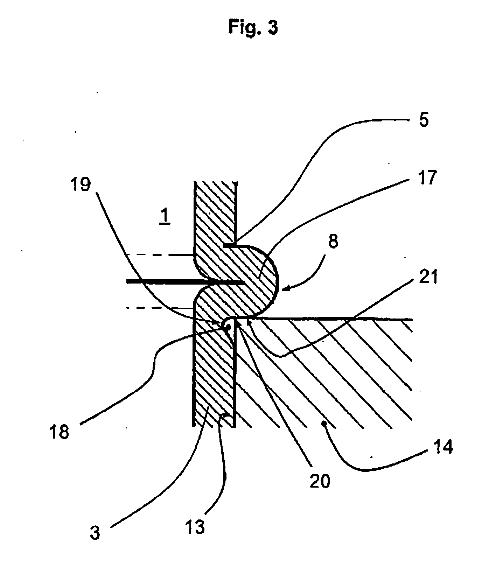

Eine nähere Betrachtung der Anlage der Ausbeulung 17 an der oberen Seite des plattenförmigen Elementes 14 in Figur 3 zeigt, dass die Ausbeulung 17 im Verformungsabschnitt 8 so ausgebildet ist, dass sie im Wesentlichen vor bzw. angrenzend an den zweiten Absatz 6 stattgefunden hat. Während der Distanzabschnitt 3 an der Innenwand der Öffnung 13 anliegt, hat sich im Bereich des zweiten Absatzes 6 ein radialer Freiraum 18 zwischen der Einweghülse 1 und der Innenwand der Öffnung 13 gebildet. Die Ausbeulung 17 weist in Richtung des zweiten Absatzes 6 eine Krümmung 19 auf, die aber im Bereich des radialen Freiraumes 18 liegt und daher nicht mit einem Öffnungsgrat 20 der Öffnung 13 in Kontakt steht. Stattdessen liegt die Ausbeulung 17 mit einem nahezu flachem Bereich 21 auf der Oberfläche des plattenförmigen Elementes 14 auf. Dadurch findet eine gleichmäßige, um die Einweghülse 1 nahezu ringförmige Materialbeanspruchung des plattenförmigen Elementes statt, wodurch hohe Spannkräfte in dem Sandwichaufbau ohne Materialbeschädigungen ermöglicht werden.

### Bezugszeichenliste:

- 1: Einweghülse
- 2: Stirnseite
- 3: Distanzabschnitt
- 4: Nut
- 5: erster Absatz
- 6: zweiter Absatz
- 7: Abschnitt zur Einleitung axialer Kräfte
- 8: Verformungsabschnitt
- 9: Krafteinleitung
- 10: vordere Seite
- 11: Kappe
- 12: Schnappverbindung
- 13: Öffnung
- 14: plattenförmiges Element
- 15: Abstreiflippe
- 16: Innengewinde
- 17: Ausbeulung
- 18: radialer Freiraum
- 19: Krümmung
- 20: Öffnungsgrat
- 21: flacher Bereich

## Patentansprüche

1. Einweghülse (1) zum Festklemmen von plattenförmigen Elementen mit einer Stirnseite (2) zur Ausbildung einer Abstützfläche, einem an die Stirnseite (2) anschließenden und in axialer Richtung der Einweghülse (1) verlaufenden Distanzabschnitt (3), einem auf der der Stirnseite (2) gegenüberliegenden Seite ausgebildeten Abschnitt (7) zur Einleitung von Axialkräften, wobei zwischen dem Distanzabschnitt (3) und dem Abschnitt (7) zur Einleitung von Axialkräften ein als eine Nut (4) in der Außenfläche der Hülse (1) ausgebildeter Verformungsabschnitt (8) vorgesehen ist, der derart ausgebildet ist, dass er sich unter einer definierten axialen Belastung (9) so verformt, dass sich eine radial nach außen erstreckende Ausbeulung (17) ergibt, **dadurch gekennzeichnet, dass** die Nut (4) auf der der Stirnseite (2) abgewandten Seite durch einen radial verlaufenden ersten Absatz (5) begrenzt wird.

2. Einweghülse nach Anspruch 1, **dadurch gekennzeichnet, dass** die Nut (4) auf der der Stirnseite (2) zugewandten Seite durch einen schräg verlaufenden und/oder abgestuft verlaufenden zweiten Absatz (6) begrenzt wird.

3. Einweghülse nach einem der vorherigen Ansprüche, **dadurch gekennzeichnet, dass** der Abschnitt (7) zur Einleitung axialer Kräfte ein Innengewindeabschnitt ist.

4. Einweghülse nach einem der vorherigen Ansprüche, **dadurch gekennzeichnet, dass** der Außendurchmesser der Einweghülse (1) im Bereich des Abschnitts (7) zur Einleitung axialer Kräfte kleiner ist als der Außendurchmesser im Bereich des Distanzabschnittes (3).

5. Einweghülse nach einem der vorherigen Ansprüche, **dadurch gekennzeichnet, dass** die Wandstärke der Einweghülse (1) im Bereich des Verformungsabschnittes (8) durch eine Aussparung auf der Innenseite vermindert ist.

6. Einweghülse nach einem der vorherigen Ansprüche, **dadurch gekennzeichnet, dass** die Hülse (1) zumindest bereichsweise aus einem bei einer definierten Belastung (9) durch Ausbeulung plastisch verformbaren Material, vorzugsweise Aluminium, besteht.

7. Einweghülse nach einem der vorherigen Ansprüche, **dadurch gekennzeichnet, dass** die Hülse (1) an der Stirnseite (2) Mittel zur Zentrierung, wie einen sich in axialer Richtung erstreckenden Vorsprung oder einer Nut, aufweist.

8. Einweghülse nach einem der vorherigen Ansprüche, **dadurch gekennzeichnet, dass** die Hülse (1) auf der der Stirnseite (2) abgewandten Seite mit einer Kappe (11) versehen ist.

9. Einweghülse nach Anspruch 7, **dadurch gekennzeichnet, dass** der Auβendurchmesser der Kappe (11), vorzugsweise im Bereich einer Abstreiflippe (15), größer ist als der Außendurchmesser des Distanzabschnittes.

10. Verwendung einer Einweghülse (1) nach einem der vorherigen Ansprüche zum Festklemmen eines plattenförmigen Elementes (14) mit einer Öffnung (13), wobei die Einweghülse (1) nach Ausbildung der Ausbeulung (17) mit dieser gegen das zu verklemmende Element (14) anlegbar ist, und wobei in diesem Zustand zwischen der Innenwand der Öffnung (13) und dem zweiten Absatz (6) ein radialer Freiraum (18) verbleibt, der durch den zweiten Absatz (6) und/oder den Nutgrund des Verformungsabschnitts (8) gebildet wird.

## Claims

1. A disposable casing (1) for clamping plate-shaped elements, comprising a front face (2) for forming a support surface, a spacer portion (3) adjoining the front face (2) and extending in the axial direction of the disposable casing (1), a portion (7) formed on the side opposing the front face (2) for introducing axial forces, a deformation portion (8) formed as a groove (4) in the outer face of the sleeve (1) being provided between the spacer portion (3) and the portion (7) for introducing axial forces, said deformation portion being configured such that it is deformed under a defined axial load (9), such that a bulged portion (17) extending radially outwards is produced, **characterised in that** the groove (4) on the side remote from the front face (2) is defined by a radially extending first protrusion (5).

2. The disposable casing according to Claim 1, **characterised in that** the groove (4) on the side facing the front face (2) is defined by a second protrusion (6) extending obliquely and/or extending in a stepped manner.

3. The disposable casing according to one of the preceding claims, **characterised in that** the portion (7) for introducing axial forces is an internal threaded portion.

4. The disposable casing according to one of the preceding claims, **characterised in that** the external diameter of the disposable casing (1) in the region of the portion (7) for introducing axial forces is smaller than the external diameter in the region of the spacer portion (3).

5. The disposable casing according to one of the preceding claims, **characterised in that** the wall thickness of the disposable casing (1) in the region of the deformation portion (8) is reduced by a recess on the inner face.

6. The disposable casing according to one of the preceding claims, **characterised in that** the sleeve (1) consists at least partially of a material, preferably aluminium, which is able to be plastically deformed by bulging under a defined load (9).

7. The disposable casing according to one of the preceding claims, **characterised in that** the sleeve (1) on the front face (2) comprises means for centring, such as a projection or a groove extending in the axial direction.

8. The disposable casing according to one of the preceding claims, **characterised in that** the sleeve (1) is provided with a cap (11) on the side remote from the front face (2).

9. The disposable casing according to Claim 7, **characterised in that** the external diameter of the cap (11), preferably in the region of a wiping lip (15), is greater than the external diameter of the spacer portion.

10. Use of a disposable casing (1) according to one of the preceding claims for clamping a plate-shaped element (14) comprising an opening (13), the disposable casing (1) after the formation of the bulged portion (17) being able to be applied with said bulged portion against the element (14) to be clamped and a radial free space (18) remaining in this state between the internal wall of the opening (13) and the second protrusion (6), said free space being formed by the second protrusion (6) and/or the bottom of the groove of the deformation portion (8).

## Revendications

1. Douille jetable (1) pour le blocage par serrage d'éléments en forme de plaques, avec une face frontale (2) destinée à former une surface d'appui, une section d'écartement (3) prolongeant la face frontale (2) et s'étendant dans la direction axiale de la douille jetable (1), une section (7) formée du côté opposé à la face frontale (2), pour l'induction de forces axiales, où il est prévu une section de déformation (8) formée comme une rainure (4) dans la surface extérieure de la douille (1), entre la section d'écartement (3) et la section (7) pour l'induction de forces axiales, et conçue de manière à se déformer sous une charge axiale définie (9), de façon à produire un bossage (17) s'étendant radialement vers l'extérieur, **caractérisée en ce que** du côté opposé à la face frontale (2), la rainure (4) est délimitée par un premier talon (5) s'étendant radialement.

2. Douille jetable selon la revendication 1, **caractérisée en ce que** du côté tourné vers la face frontale (2), la rainure (4) est délimitée par un deuxième talon (6) s'étendant en biais et/ou en gradin.

3. Douille jetable selon l'une des revendications précédentes, **caractérisée en ce que** la section (7) pour l'induction de forces axiales est une section de filetage intérieur.

4. Douille jetable selon l'une des revendications précédentes, **caractérisée en ce que** dans la région de la section (7) pour l'induction de forces axiales, le diamètre extérieur de la douille jetable (1) est inférieur au diamètre extérieur dans la région de la section d'écartement (3).

5. Douille jetable selon l'une des revendications précédentes, **caractérisée en ce que** dans la région de la section de déformation (8), l'épaisseur de paroi de la douille jetable (1) est diminuée par un évidement du côté intérieur.

6. Douille jetable selon l'une des revendications précédentes, **caractérisée en ce que** la douille jetable (1) est constituée au moins partiellement d'un matériau plastiquement déformable formant une bosse sous une charge définie (9), de préférence l'aluminium.

7. Douille jetable selon l'une des revendications précédentes, **caractérisée en ce que** sur la face frontale (2), la douille (1) comporte des moyens de centrage, tels qu'une saillie ou une rainure s'étendant dans la direction axiale.

8. Douille jetable selon l'une des revendications précédentes, **caractérisée en ce que** du côté opposé à la face frontale (2), la douille jetable (1) est pourvue d'un bouchon (11).

9. Douille jetable selon la revendication 7, **caractérisée en ce que** le bouchon (11) est supérieure au diamètre extérieur de la section d'écartement, de préférence dans la région d'une lèvre de raclage (15).

10. Utilisation d'une douille jetable (1) selon l'une des revendications précédentes, pour le blocage par serrage d'un élément en forme de plaque (14) avec une ouverture (13), dans laquelle, suite à la formation du bossage (17), la douille jetable (1) peut être appliquée avec celui-ci contre l'élément (14) à serrer, et dans laquelle, dans cet état, il reste un espace libre radial (18) entre la paroi intérieure de
l'ouverture (13) et le deuxième talon (6), qui est formé par le deuxième talon (6) et/ou le fond de rainure de la section de déformation (8).
